(19) Europäisches Patentamt
European Patent Office
Office européen des brevets

(11) **EP 1 929 657 B1**

(12) **EUROPÄISCHE PATENTSCHRIFT**

(45) Veröffentlichungstag und Bekanntmachung des Hinweises auf die Patenterteilung:
**19.10.2011 Patentblatt 2011/42**

(51) Int Cl.:
***H04B 7/005*** (2006.01)

(21) Anmeldenummer: **06805307.3**

(22) Anmeldetag: **18.09.2006**

(86) Internationale Anmeldenummer:
**PCT/DE2006/001653**

(87) Internationale Veröffentlichungsnummer:
**WO 2007/036200 (05.04.2007 Gazette 2007/14)**

(54) **SIGNALISIERUNGSVERFAHREN ZUR DEZENTRALISIERTEN ONLINE-SENDELEISTUNGSALLOKATION IN EINEM DRAHTLOSEN NETZ**

SIGNALING METHOD FOR THE DECENTRALIZED ALLOCATION OF ONLINE TRANSMISSION POWER IN A WIRELESS NETWORK

PROCEDE DE SIGNALISATION POUR L'ALLOCATION DECENTRALISEE DE PUISSANCES D'EMISSION EN LIGNE DANS UN RESEAU SANS FIL

(84) Benannte Vertragsstaaten:
**DE FR**

(30) Priorität: **28.09.2005 DE 102005047753**

(43) Veröffentlichungstag der Anmeldung:
**11.06.2008 Patentblatt 2008/24**

(73) Patentinhaber: **Fraunhofer-Gesellschaft zur Förderung der angewandten Forschung e.V.
80686 München (DE)**

(72) Erfinder:
• **BOCHE, Holger
10318 Berlin (DE)**
• **STANCZAK, Slawomir
10551 Berlin (DE)**
• **WICZANOWSKI, Marcin
12157 Berlin (DE)**

(74) Vertreter: **Zinkler, Franz et al
Schoppe, Zimmermann, Stöckeler & Zinkler
Patentanwälte
Postfach 246
82043 Pullach bei München (DE)**

(56) Entgegenhaltungen:
• **CHIANG M: "Balancing Transport and Physical Layers in Wireless Multihop Networks: Jointly Optimal Congestion Control and Power Control" IEEE JOURNAL ON SELECTED AREAS IN COMMUNICATIONS, IEEE SERVICE CENTER, PISCATAWAY, US, Bd. 23, Nr. 1, Januar 2005 (2005-01), Seiten 104-116, XP011124246 ISSN: 0733-8716 in der Anmeldung erwähnt**

## Beschreibung

Die Erfindung bezieht sich auf ein Signalisierungsverfahren zur Umsetzung von für elastischen Datenverkehr nach dem Best-Effort-Prinzip konzipierten iterativen Algorithmen zur dezentralisierten Online-Sendeleistungsallokation in einem drahtlosen Netz mit i Sendeknoten und i' Empfangsknoten, die aktuelle, direkt verbundene Verbindungspaare ii' bilden, in einem interferierenden Übertragungskanal, dessen reziprokes Übertragungsverhalten bei den Empfangsknoten i' bekannt ist.

Die vorliegende Erfindung findet Anwendung bei verteilten Mobilfunknetzen, wie zum Beispiel Ad-hoc- oder Sensorfunknetze mit interferierenden Übertragungskanälen. Die Funkschnittstelle kann zum Beispiel auf CDMA mit nichtorthogonalen Spreizsequenzen basieren. Interferenz entsteht auch in Systemen, in denen eine räumliche Wiederverwendung von Übertragungskanälen stattfindet (space reuse). Angewendet werden soll die Erfindung in drahtlosen Netzen, in denen keine Garantie der Dienstgüte im Sinne der Erfüllung bestimmter Anforderungen, z.B. bezüglich der Datenrate oder Latenzzeit, gegeben wird. Die entsprechenden Algorithmen sind daher für den elastischen Datenverkehr konzipiert und arbeiten nach dem "Best-Effort" Prinzip, das heißt, nach dem bestmöglichen Angebot der jeweils aktuellen Ressourcen an den Nutzer im Sinne größter Fairness gegenüber allen Nutzern im Netz. Eine gegenüber einzelnen Nutzern unfaire Datenratenmaximierung kommt daher nicht in Betracht, vielmehr ist eine für alle Nutzer faire Sendeleistungsverteilung anzustreben. Weiterhin bezieht sich das erfindungsgemäße Signalisierungsverfahren auf direkte Verbindungen zwischen einem Sendeknoten und einem Empfangsknoten (One-hop ad-hoc Netzwerk). Indirekte Verbindungen über Zwischenknoten (Multi-hop ad-hoc Netzwerk) entsprechen aber einer Aneinanderreihung von direkten Verbindungen, so dass diese analog mit dem erfindungsgemäßen Signalisierungsverfahren behandelt werden können.

Da sich die Übertragungskanäle zwischen aktuell gebildeten Verbindungspaaren ii' aus einem Sendekonten i und einem Empfangsknoten i' gegenseitig stören, ist eine geeignete Koordination der Sendeleistungen notwendig, um starke Interferenzen zu vermeiden. Bei der Sendeleistungskontrolle für den elastischen Datenverkehr geht es darum, die Sendeleistungen so zuzuordnen, dass eine vorgegebene globale Nutzenfunktion (*utility function*) maximal wird. Dieses Problem ist üblicherweise äquivalent mit einer Minimierung der Zielfunktion, die die Form einer linear gewichteten Summe von QoS-Parametern (*Quality of Service* - gewährleistete Übertragungsqualität) annimmt, für eine Optimierung der Sendeleistungsallokation beim Best-Effort-Kriterium. Das Ziel eines guten Signalisierungsverfahrens ist es daher, mit möglichst minimalem Aufwand die Informationen zur Berechnung des Sendeleistungsvektors, der die Zielfunktion minimiert, gemäß des gewählten Optimierungsalgorithmus an den entsprechenden Sendeknoten zuverlässig bereitzustellen. Der berechnete Leistungsvektor wird als optimal bezeichnet. Dabei stellt jeder Eintrag des Leistungsvektors die Sendeleistung auf einem Übertragungskanal in einem Verbindungspaar ii' dar.

Die Algorithmen zur Ermittlung des optimalen Leistungsvektors sind in der Regel iterativer Natur: Sendeknoten i starten mit einer bestimmten Sendeleistung, die dann schrittweise gemäß einer vorgegebenen Vorschrift angepasst wird. Gute Algorithmen zeichnen sich dadurch aus, dass sie sich in jedem Schritt verbessern (Monotonie), zu einem globalen Optimum konvergieren und schon nach wenigen Schritten nah am Optimum sind. Das Hauptproblem bei der Implementierung derartiger iterativer Algorithmen in verteilten drahtlosen Mobilfunknetzen ohne eine zentrale Steuerungseinheit besteht darin, dass zur Durchführung der Iterationsschleifen eine bestimmte globale Information benötigt wird, die als Gradient der gewählten Zielfunktion in Bezug auf die Optimierungsvariable - bei der Erfindung handelt es sich hierbei um die Sendeleistung - im Netz verteilt ist.

## Stand der Technik

**Aktuelle Entwicklung** - Die rasche Entwicklung der digitalen Technologie hat in den letzten Jahren den Charakter und die Bedeutung der drahtlosen Kommunikation in der modernen Gesellschaft entscheidend verändert. Die datenbasierten Anwendungen gewinnen zusehends an Bedeutung gegenüber der Sprachübertragung, die bis Mitte der neunziger Jahre noch die einzig relevante Applikation im Mobilfunkstandard der zweiten Generation (GSM - *Global Standard for Mobile Communications*) war. Die Veränderung hat unscheinbar mit der Popularisierung der Kurzmitteilungen (SMS - *Short Message Service*) und der darauf folgenden Erweiterung des GSM-Netzes um höherratige Dienste (GPRS - *General Packet Radio Service*) begonnen. Mittlerweile sind die hochratigen und teilweise echtzeitfähigen Datendienste im Mobilfunkstandard der dritten Generation (UMTS - *Universal Mobile Telephone System*) fest verankert und werden in den aufbauenden zellularen Standards (*Beyond 3G*) noch mehr an Bedeutung gewinnen.

Zu den populärsten datenbasierten Nutzer-Aktivitäten im UMTS-Netz zählen heutzutage z.B. der Austausch von Multimedia-Nachrichten (MMS - *Multimedia Message Service*), die Nutzung verschiedener Download-Dienste (Musik, Klingeltöne) und teilweise schon Video-Telefonie. Die Expansion der drahtlosen Datendienste beschränkt sich aber nicht auf den zellularen Mobilfunk. Sie trug zur Popularisierung des so genannten *ad-hoc* Netzwerk-Konzeptes in privaten Haushalten bei, einer selbstorganisierenden Mehrnutzer- und Mehrdienst-Kommunikationsart, die in der Regel ohne übergeordnete Kommunikationsknoten (wie die Basisstation im zellularen Konzept) auskommt und daher auf *physikalischen* Direktverbindungen zwischen Datenquellen und Datensenken basiert. In den drahtlosen Kommunikationsstandards des IEEE ist der ad-hoc Modus das Haupt-Operationsprinzip. Die drahtlosen ad-hoc Anwendungen sind sowohl im industriellen als auch im privaten Sektor zahlreich und haben eine hervorragende Zukunftsperspektive. Zu den anschaulichsten Nutzungsbeispielen zählen z.B. der Austausch von großen Datenmengen zwischen zwei Endgeräten in verschiedenen Büroräumen, eine echtzeitfähige instantane, d.h. augenblickliche Sprach- oder/ und Bildverbindung (*streaming*) zwischen zwei entfernten Räumen eines Einfamilienhauses/ Bürogebäudes oder eine drahtlose sensorische Überwachung eines wichtigen Areals (SensorNetzwerk).

**Servicequalität in drahtlosen Netzwerken** - Die Endnutzer empfinden die Servicequalität (QoS - *Quality of Service*) der Netzwerkdienste subjektiv anhand von Kriterien wie Verständlichkeit der Sprache, Geschwindigkeit des Datentransfers, Stetigkeit (Ruckellosigkeit) der Echtzeit-Datenverbindung. Aus Ingenieurssicht werden die Perzeptionskriterien als Gesamtheit aller Wahrnehmungen mit so genannten QoS-Parametern verbunden. Das Niveau des Signal-zu-Interferenz-Verhältnisses (*SIR - Signal to Interference Ratio,* SINR - *Signal to Interference and Noise Ratio*), ausgedrückt z.B. in Dezibel, kann dabei z.B. die Sprachverständlichkeit spiegeln, die Datenrate (in [bit/s]) entspricht der Transfer-Geschwindigkeit und die Verzögerungszeiten (in [s]) der Datenpakete stehen in direkter Verbindung mit Echtzeitfähigkeit. Logischerweise ist wegen Begrenzung der Netzwerkressourcen, wie Sendeleistung und Bandbreite, nicht ausgeschlossen, dass bei mehreren gleichzeitig aktiven Verbindungen einige Endnutzer eine defizitäre Servicequalität empfinden. Das Übersprechen zwischen den Verbindungen (Interferenz) stellt dabei einen entscheidenden zusätzlichen destruktiven Faktor dar. Das Übersprechen kann durch abwechselnde Zuweisung von separaten Zeitschlitzen, bzw. Separation der Frequenzbänder aller Verbindungen vermieden werden. Aufgrund des hohen Kontroll- und Synchronisationsaufwandes kommt diese Möglichkeit jedoch speziell in ad-hoc Netzwerken nicht in Frage.

*Beispiel für ad-hoc-Netz mit einer Degradation der Servicequalität durch Interferenz*: In einem Büroraum befinden sich vier Notebooks. Die Notebooks haben gleichzeitig paarweise hochratige drahtlose direkte ad-hoc Verbindungen aufgebaut, z.B. zum Transfer von zwei großen Datenmengen. Wegen der relativ geringen Distanz zwischen den benachbarten Sendern und Empfängern beider Verbindungen interferieren die Sendesignale mit den Empfangssignalen an den jeweiligen Empfängern stark. Dies wirkt sich destruktiv auf die Datenraten und somit auf die Dauer beider Verbindungen aus. Beide Verbindungen brauchen damit eine (viel) längere Zeit zur Fertigstellung des Transfers als es im Einzelbetrieb der Fall gewesen wäre.

**Optimale Ressourcen-Allokation** - Eine Verbesserung der Servicequalität-Situation durch Erhöhung des Leistungs- und Bandbreiten-Budgets ist in realistischen Anwendungsfällen nicht möglich, einerseits wegen der gesetzlicher Begrenzung des Sendesigrialpegels und andererseits wegen der Limitierung der nutzbaren Frequenzbänder (das erste und zweite ISM-Band, die lizenzierten UMTS-Bänder). Aus diesem Grund spielt die Optimierung der Ressourcen-Allokation zwischen den Netzwerk-Knoten eine extrem wichtige Rolle. Unter Berücksichtigung des Charakters der verschiedenen Verbindungen ermöglicht sie die optimale Umsetzung des vorhandenen Leistungs- und Bandbreiten-Budgets in die wahrgenommene Servicequalität der Endnutzer.

**Realisierung der Optimalen Ressourcen-Allokation** - Der Schlüssel zur effizienten Ressourcen-Allokation liegt in der Leistungsfähigkeit der verwendeten Optimierungsprozeduren, die bei der Erfindung ausschließlich von iterativer Natur sind. Unter Optimierungsprozedur wird dabei die Verbindung des iterativen Optimierungsalgorithmus mit den Schemata der zur Durchführung der Iterationen nötigen Signalisierung (*Signalling*) und Rück-Signalisierung (*Feedback Signalling*) zwischen den Knoten im Netzwerk verstanden. Unter Signalisierung wird die Übertragung aller für die Steuerung des Netzes erforderlichen Daten verstanden. Die Signalisierungsdaten sind daher von den Informationsdaten, die die zu übertragende eigentliche Information enthalten, zu unterscheiden.

**Problematik der Online-Optimierung** - Eine der entscheidenden Herausforderungen an die Algorithmen und ihre Implementierung ist die Schnelllebigkeit in heutigen Netzwerken. Moderne Datennetzwerke weisen eine schnelle Zeitveränderlichkeit der Topologie und der Datenverkehrsstruktur auf, z.B. aufgrund von Mobilität der Netzwerk-Knoten und paketorientierter Datenübertragung. Die optimale Re-Allokation der Ressourcen darf dabei nur mit einer tolerierbaren Verzögerung dem Zeitraster der Topologie- und Datenverkehrsänderungen folgen (Online-Optimierung). Folglich müssen die implementierten Algorithmen neben Genauigkeit auch ausreichend gute Konvergenzeigenschaften aufweisen, d.h. schnell das Endergebnis erreichen. Wie die Praxis gezeigt hat, sind diese Schwierigkeiten bei der zellularen Kommunikation gut zu bewältigen. Dank eines quasi-unrestrikierten Energieverbrauchs und großer Rechenkapazität erlaubt die Basisstation die Implementierung von hochkomplexen Optimierungsalgorithmen. Daher ist sie im Stande, den Netzwerkveränderungen zu folgen und gegebenenfalls die Re-Allokation der Ressourcen im Netzwerk rechtzeitig zu veranlassen. Die ad-hoc Netzwerke stoßen dabei aufgrund des üblichen Batteriebetriebs der Netzwerk-Knoten und der Begrenzung der Gerätekosten pro Knoten auf energiebedingte und rechenleistungsbedingte Grenzen. Dies trägt zur Erhöhung der Anforderungen an die Komplexität und Konvergenzgeschwindigkeit der verwendeten Optimierungsprozeduren bei.

**Problematik der lokalen Netzwerk-Kenntnis** - In zellularen Netzwerken verfügt die Basisstation üblicherweise über globale Netzwerk-Kenntnis, in Form von Kanalzuständen (Voraussetzung hierzu ist die so genannte Reziprozität des Kanals, die jedoch in allen praxisrelevanten Netzwerkszenarien gilt), Datenverkehrsarten und Servicequalität-Anforderungen und ist daher prädestiniert für die zentralisierte Ausführung der Online-Optimierung der Ressourcen-Allokation. Durch Signalisierung veranlasst sie lediglich nach jedem Optimierungsdurchlauf die (Re-) Allokation der Ressourcen - für den Uplink, bzw. (re-) allokiert ihre Ressourcen selbst - für den Downlink. Einer ähnlichen Prozedur in ad-hoc Netzwerken steht deren Dezentralisierung im Wege, die darin besteht, dass in der Regel keiner der Netzwerk-Knoten übergeordnet ist und daher die globale Kenntnis der Netzwerk-Parameter, d.h. die Kanalzustände zwischen allen Knoten (Sendeknoten, Empfangsknoten) oder Stärken der Interferenz zwischen allen Verbindungen, an keinem der Knoten vorhanden ist. Netzwerk-Knoten verfügen in der Regel höchstens über lokale Netzwerk-Kenntnis, z.B. in Form von Kanalzuständen oder Interferenzstärken in der nächsten Umgebung, die aus einer lokalen Signalisierung zwischen den Nachbarknoten stammen kann. Einer der wichtigen Gründe für das Fehlen der globalen Netzwerk-Kenntnis an den Knoten im ad-hoc Netzwerk kann die räumliche Verbreitung des Netzwerks sein. In einem solchen Fall sind die Empfangsknoten durch die Sendeknoten unter Umständen nicht direkt erreichbar und die letzteren sind damit gezwungen, über Zwischenknoten zu kommunizieren (so genannte "Multi-hop-Übertragung"). Der Wert der Erfindung kommt jedoch zum Vorschein bereits bei der Betrachtung der zellularen und so genannten One-hop ad-hoc Netzwerke, d.h. solcher, die ganzflächig direkte Verbindungen ermöglichen. Daher wird in diesem Dokument auf die explizite Betrachtung der Multi-hop-Problematik verzichtet, auf die die Erfindung aber analog anwendbar ist.

**Konzept der zentralisierten Realisierung der Online-Ressourcen-Allokation** - Eine Möglichkeit diese Schwierigkeit in ad-hoc Netzwerken zu bewältigen, ist die Einführung einer virtuellen zellularen Infrastruktur durch Nominierung eines übergeordneten Knotens, dem die globale Kenntnis der Netzwerk-Parameter durch Übertragung der lokalen Kenntnisse aller Knoten bereitgestellt wird. Der nominierte Knoten übernimmt die Funktion der Basisstation, führt eine zentralisierte Optimierung durch und veranlasst eine (Re-) Allokation der Ressourcen im Netzwerk durch Signalisierung. In ad-hoc Netzwerken ist die Realisierung der Online-Ressourcen-Allokation mit Hilfe der virtuellen zellularen Struktur das am nächsten liegende Konzept. Der Vorteil ist dabei die Anwendbarkeit von zentralisierten Optimierungsalgorithmen, denen eine gut entwickelte allgemeine algorithmische Optimierungstheorie zu Grunde liegt. In den letzten Jahren entstanden auch zahlreiche netzwerkspezifische algorithmische Lösungen für spezielle Ressourcen-Allokationskriterien. Der signifikante Nachteil des Realisierungsansatzes mit virtueller zellularer Struktur ist die aufwändige Signalisierung, die einerseits die (Re-) Allokation der Ressourcen deutlich verzögert und andererseits zu Lasten der Batterielaufzeiten aller Netzwerk-Knoten fällt. Besonders benachteiligt ist hierbei die virtuelle Basisstation (der nominierte Knoten), die aufwändige Rechenoperationen durchzuführen hat.

**Konzept der dezentralisierten Realisierung der Online-Ressourcen-Allokation** - Unter den vorgenannten Betrachtungen ist das konkurrierende Realisierungskonzept, das auf verteilten Netzwerk-Aktionen ohne globale Kooperation basiert, das vorteilhaftere für ad-hoc Netzwerke. Bei diesem Konzept verfolgen die Netzwerk-Knoten unabhängig voneinander ein festgelegtes lokales Vorgehensschema, das in der Regel von iterativer Natur ist. Zu den einzelnen Schritten des Schemas kann auch lokale Signalisierung gehören, z.B. im Bezug auf die Nachbarknoten oder auf einen spezifizierten Knoten. Je aufwändiger jedoch die Signalisierung ist, desto kleiner ist der diesbezügliche Vorteil gegenüber dem Konzept der zentralisierten Realisierung. Resultat solcher im Netzwerk verteilten Aktionen sind die Kenntnisse der optimalen Ressourcen-Zuweisungen an den jeweiligen Netzwerk-Knoten. In den letzten Jahren wurden einige dezentralisierte Optimierungsprozeduren für diverse Ressourcen-Allokationskriterien entwickelt. Für die Mehrheit der relevanten Allokationskriterien existieren jedoch noch keine nennenswerten dezentralisierten Realisierungskonzepte.

Wie bereits weiter oben ausgeführt, liegt das Hauptproblem bei der Implementierung von iterativen Algorithmen zur Ermittlung der optimalen Sendeleistungsallokation in verteilten drahtlosen Mobilfunknetzen ohne eine zentrale Steuerungseinheit darin, die zur Durchführung der Iterationsschleifen erforderliche globale Information zu erhalten, die als Gradient der Sendeleistung im Netz verteilt ist.

**Stand der Technik für übliche Lösungsansätze:** Normalerweise werden globale Informationen mit Hilfe eines "Flooding Protokolls" zwischen allen Knoten ausgetauscht. Hierbei handelt es sich um den einfachsten Algorithmus zur Informationsverteilung in einem verteilten Netz. Dabei sendet ein Initiator eine Nachricht lokal an alle seine Nachbarn. Jeder, der die Nachricht erhält und bisher noch nicht informiert wurde, gibt sie wiederum an alle seine Nachbarn weiter, vergleiche Veröffentlichung von Mung Chiang "Balancing Transport and Physical Layers in Wireless Multihop Networks : Jointly Optimal Congestion Control ans Power Control" (IEEE Journal of Selected Areas in Communications, Vol. 23, No. 1, January 2005, pp 104-116), von der die vorliegende Erfindung als nächstliegendem Stand der Technik ausgeht. Eine solche Vorgehensweise führt jedoch zur Verschwendung knapper Ressourcen (Bandbreite und Leistung) in Mobilfunksystemen und daher ist für viele Anwendungen inakzeptabel.

## Aufgabenstellung

Ausgehend von dem gattungsbildenden Signalisierungsverfahren, das aus der oben genannten Veröffentlichung bekannt ist, ist vor dem Hintergrund der zuvor geschilderten allgemeinen Problematik bei drahtlosen Netzen mit einer dezentralisierten Online-Sendeleistungsallokation die der Erfindung zugrunde liegende **Aufgabe** darin zu sehen, ein Signalisierungsverfahren, einen Sendeknoten, einen Empfangsknoten und entsprechende Verfahren zum Betreiben desselben anzugeben, wonach die zur Durchführung der iterativen Algorithmen erforderliche Gradientenbildung bezüglich der Sendeleistung als globale Netzinformation in besonders einfacher, Ressourcen schonender und instantaner Weise erfolgt, so dass eine effiziente dezentralisierte Implementierung der Gradienten-basierten iterativen Algorithmen möglich ist. Die erfindungsgemäße **Lösung** für diese Aufgabe Ist den Patentansprüchen 1, 2, 4, 5, 6 und 7 zu entnehmen und wird im Folgenden allgemein und im speziellen Ausführungsbeispiel näher erläutert.

Die erfindungsgemäße Lösung schlägt eine abwechselnde Nutzung eines primären und eines adjungierten Netzes vor. Dabei wechseln die jeweiligen Sende- und Empfangsknoten in den aktuellen Verbindungspaaren ihre Rollen. Die Sendesignale im adjungierten Netz werden derart vorverzerrt, dass auf jedem Übertragungskanal in einem aktuellen Verbindungspaar ii' der Einfluss des "eigenen" Mobilfunkkanals beseitigt wird. Jedes Verbindungspaar ii' ist mit einem niederratigen Kontroll- und Rückkanal (orthogonal und damit ohne Interferenz) ausgestattet, der im primären Netz genutzt wird. Über den Rückkanal wird die lokale Interferenz im Verbindungspaar dem jeweiligen Sendeknoten mitgeteilt. Dieser ermittelt daraus eine erste erforderliche Sendeleistung (lokale Sendeleistung). Die globale Interferenz zwischen dem Sendeknoten und allen anderen Empfangsknoten erfährt der Sendeknoten implizit durch die Rücksignalisierung von seinem aktuellen Empfangsknoten über den Übertragungskanal unter Kompensation der lokalen Interferenz und ermittelt daraus eine zweite Sendeleistung. Da die erforderliche Sendeleistung für die lokale Interferenz beim Sendeknoten über den Rückkanal bereits bekannt ist, kann er nunmehr die erforderliche globale Sendeleistung direkt ermitteln, indem er von der zweiten ermittelten Sendeleistung die bekannte lokale Sendeleistung subtrahiert. Der Gradient im Iterationsschritt n+1 in Abhängigkeit von der Sendeleistung ergibt sich dann aus der Subtraktion der globalen Sendeleistung von der lokalen Sendeleistung im Iterationsschritt n. Eine Informationsübermittlung zwischen allen Knoten, wie aus dem Stand der Technik bei Flooding-Protokoll bekannt, entfällt, da die globale Information, die für die Gradientenbildung erforderlich ist, direkt aus dem überlagerten Rücksignal ermittelt wird.

Das erfindungsgemäße Signalisierungsverfahren zur Umsetzung von für elastischen Datenverkehr nach dem Best-Effort-Prinzip konzipierten iterativen Algorithmen zur dezentralisierten Online-Sendeleistungsallokation in einem drahtlosen Netz mit i Sendeknoten und i' Empfangsknoten in einem interferierenden Übertragungskanal, dessen reziprokes Übertragungsverhalten bei den Empfangsknoten i' bekannt ist, weist folgende erfindungswesentlichen Merkmale auf :

- Definition eines primären Netzes durch einen drahtlosen Datenverkehr aus zu übertragenden Informationsdaten und netzsteuernden Signalisierungsdaten im interferierenden Übertragungskanal von den Sendeknoten i zu den Empfangsknoten i' in jedem Verbindungspaar ii'. Dabei umfasst das primäre Netz auch gerichtete orthogonale niederratige Kontroll- und Rückkanäle lokal in jedem Verbindungspaar ii'.

- Definition eines adjungierten Netzes durch einen drahtlosen Datenverkehr aus den Signalisierungsdaten im interferierenden Übertragungskanal von den Empfangsknoten i' zu den Sendeknoten i in jedem Verbindungspaar ii'.

- Alternierende Nutzung des primären Netzes und des adjungierten Netzes während des drahtlosen Datenverkehrs zur Bereitstellung der zur iterativen Gradientenbildung in einem ausgewählten iterativen Gradienten-basierten Algorithmus nötigen Information über den aktuellen Leistungszustand im Netz.

- Während der alternierenden Nutzung werden im primären Netz Signalisierungsdaten global synchron in einem zwischen allen Sendeknoten i vereinbarten Zeitraster über den interferierenden Übertragungskanal, lokal in jedem Verbindungspaar ii' über die Kontrollkanäle bezüglich einer veränderlichen Wichtung der Verbindungspriorität und über die Rückkanäle bezüglich des aktuellen Zustands des Übertragungskanals gesendet. In den Sendeknoten i wird eine erste Sendeleistungsanpassung durchgeführt.

- Während der alternierenden Nutzung werden im adjungierten Netz an den Empfangsknoten i' die Signalisierungsdaten zur Kompensation des Einflusses des jeweils in einem aktuellen Verbindungspaar ii' gebildeten gerichteten Übertragungskanals auf den interferierenden Übertragungskanal vorverzerrt und die vorverzerrten Signalisierungsdaten global synchron in einem zwischen allen Empfangsknoten i' vereinbarten Zeitraster über den interferierenden Übertragungskanal zu den Sendeknoten i in den Verbindungspaaren ii' gesendet. In den Sendeknoten i wird dann aus den empfangenen vorverzerrten Signalisierungsdaten die Information ermittelt, die den aktuellen Interferenz- und Sendeleistungszustand des Netzes widerspiegelt und zur Berechnung der i-ten Gradienten-Komponenten im ausgewählten iterativen Algorithmus nötig ist.

Die gesamte Signalisierungsprozedur des erfindungsgemäßen Signalisierungsverfahrens besteht somit aus vier Teilen:

1. Im primären Netz teilt jeder Sendekonten i über den jeweiligen direkten Kontrollkanal im Verbindungspaar ii' dem Empfangsknoten i' das aktuelle Gewicht der aktuell herzustellenden Verbindung bezüglich ihrer Priorität im drahtlosen Netz mit. Dies ist jedoch nur dann notwendig, wenn sich diese Variable geändert hat und die Empfangsknoten i' diese Information nicht besitzen. Auch andere Informationen wie zum Beispiel die verwendete Sendeleistung können mitgeteilt werden. Außerdem müssen die Empfangsknoten i' wie bei jedem kohärenten Verfahren den aktuellen Übertragungskanal kennen. Es ist zu beachten, dass hier nur eine lokale Kommunikation zwischen benachbarten Sende- und Empfangsknoten stattfindet (One-hop, analog anwendbar auf Multi-hop).

2. **Nutzung des primären Netzes:** Alle Sendeknoten im primären Netz senden synchron in einem zwischen allen Sendeknoten i vereinbarten, festgelegten Zeitraster. Gesendet werden die eigentlichen Informationsdaten und auch Pilotsymbole. Die Empfangsknoten schätzen jeweils das Signal-zu-Interferenz-Verhältnis und die Interferenzleistung durch Mittelung über eine Reihe von Pilotsymbolen.

3. Im primären Netz teilt jeder Empfangsknoten i' über den jeweiligen Rückkanal im Verbindungspaar ii' dem Sendeknoten i das aktuelle Signal-zu-InterferenzVerhältnis (oder eine vom SIR abhängige Funktion) mit.

4. **Nutzung des adjungierten Netzes:** Alle Empfangsknoten (oder Sendeknoten im adjungierten Netz) senden synchron ein entsprechend vorverzerrtes Signal. Die Sendeknoten (oder Empfangsknoten im adjungierten Netz) schätzen die Leistung des jeweiligen aktuellen Empfangssignals durch Mittelung über eine Reihe von Pilotsymbolen. Diese Leistung wird dann als Basis zur Berechnung des Gradienten für den iterativen Algorithmus benutzt.

Mit der Erfindung wird ein Konzept der dezentralisierten Signalisierung beansprucht, das im Zusammenhang mit der iterativen Optimierung der Sendeleistungsallokation im Sinne des so genannten Best-Effort-Kriteriums genutzt wird. Für die Erklärungen in den folgenden Abschnitten b, c und dem Ausführungsbeispiel wird eine festgelegte Zuweisung von Medium-Ressourcen angenommen, z.B. Zuweisung von Spreizsequenzen in einem CDMA-Netzwerk (CDMA - *Code Division Multiple Access*) oder Allokation von Frequenzbändern in einem FDMA-Netzwerk (FDMA - *Frequency Division Multiple Access*). Damit reduziert sich die Optimierung der Ressourcen-Allokation auf eine Optimierung der Sendeleistungsallokation. Zur Vorstellung des Ausführungsbeispiels des Signalisierungsverfahrens nach der Erfindung werden drei Zwischenschritte benötigt. Im Abschnitt a wird an einem Beispiel die Funktionsweise des Signalisierungsverfahrens und damit die Nutzung des adjungierten Netzes definiert und erklärt. Weiterhin wird die für das Signalisierungsverfahren nach der Erfindung erforderliche Vorverzerrung erläutert. Im nachfolgenden Abschnitt b werden die Grundzüge der Theorie der Ressourcen-Allokation nach dem Best-Effort-Kriterium vorgestellt. Im Abschnitt c wird kurz das Prinzip der iterativen Optimierung der Ressourcen-Allokation (bei einem beliebigen Kriterium) vorgestellt. Mit diesen Erklärungen wird das Ausführungsbeispiel des Signalisierungsverfahrens nach der Erfindung verständlich und einfach nachvollziehbar.

**a. Sendestrategie des adjungierten Netzwerkes**

Vor dem Aufbau der Verbindungen im zellularen und im ad-hoc Netzwerk werden die Empfangsknoten über die bevorstehende Kommunikation benachrichtigt. Dies erfolgt von den entsprechenden Sendeknoten durch Aussendung von Signalisierungssequenzen (z.B. mit Pilot-Signalen und Datenverkehrsinformationen) über die Kontrollkanäle. Unter Anwendung der Online-Ressourcen-Allokation wird anschließend in der Regel die Rück-Signalisierung durch die Empfangsknoten benötigt. Dabei hängt es allgemein vom Realisierungskonzept ab, ob die Rück-Signalisierung von globaler (Konzept der zentralisierten Realisierung der Online-Ressourcen-Allokation, s.o.) oder lokaler (Konzept der dezentralisierten Realisierung der Online-Ressourcen-Allokation als Grundlage für das Signalisierungsverfahren nach der Erfindung, s.o.) Natur ist, und speziell davon ab, ob sie an alle Sendeknoten oder nur an den zugehörigen Sendknoten adressiert ist.

Der Übersichtlichkeit der Darstellung wegen sei angenommen, dass in einem ad-hoc Netzwerk K Sendeknoten mit K anderen Empfangsknoten kommunizieren wollen, wobei keiner der Empfangsknoten mehrere Verbindungen empfängt und keiner der Sendeknoten Verbindungen zu mehreren Empfangsknoten aufbaut.

Definition: Als Sendestrategie des adjungierten Netzwerkes bei dem Signalisierungsverfahren nach der Erfindung wird ein Rück-Signalisierungsschema definiert, bei dem K Empfangsknoten synchron senden und eine Vorentzerrung des Kanals zu dem jeweiligen Sendeknoten anwenden. Unter Synchronität wird dabei verstanden, dass es ein sich regelmäßig in einem Raster wiederholendes Zeitintervall gibt, in dem alle Empfangsknoten senden.

Das folgende Beispiel zeigt die Anwendung der Sendestrategie des adjungierten Netzwerkes bei der Rück-Signalisierung bei einem ad-hoc Netzwerk. Betrachtet wird ein ad-hoc Netzwerk mit 8 Knoten. Zum betrachteten Zeitpunkt sollen gleichzeitig vier direkte Verbindungen zwischen den Knoten $i$ und $i'$, i =1,..., 4 , aufgebaut werden. Durch Indizes mit Strich sind die Empfangsknoten indiziert. Jeder Sendeknoten i erzeugt zu allen benachbarten Empfangsknoten i' Interferenz, die mit den Interferenzfaktoren berücksichtigt werden (beispielsweise Interferenz zwischen dem Sendeknoten 3 und dem Empfangsknoten 2' : Interferenzfaktor $V_{32'}$, Interferenz zwischen dem Sendeknoten 3 und dem Empfangsknoten 4' : Interferenzfaktor $V_{34'}$, Interferenz zwischen dem Sendeknoten 3 und dem Empfangsknoten 1' : Interferenzfaktor $V_{31'}$ usw.). Es wird eine Übertragung mit flachem Kanalschwund angenommen, bei der bekanntermaßen die Basisband-Kanalimpulsantwort durch einen komplexwertigen Kanalkoeffizienten ausgedrückt werden kann. Der Koeffizient des Kanals zwischen dem $j$-ten und $i'$-ten Knoten wird mit $h_{ji'}$ bezeichnet.

Die Interferenz-Verhältnisse werden definiert zu :

$$V_{ji'} := \frac{|h_{ji'}|^2}{|h_{ii'}|^2}, \quad j \neq i, \quad i, j = 1, ..., 4,  \tag{1}$$

und als Interferenz-Faktoren bezeichnet. Sollte $h_{ji} >> h_{ii'}$ gelten, wächst $V_{ji'}$ theoretisch gesehen ins Unendliche. Praktisch würde dies bedeuten, dass der Kanal $h_{ii'}$ zu schwach in Relation zur potentiellen Interferenz des $j$-ten Sendeknotens ist und die Verbindung zwischen $i$-tem Sendeknoten und $i'$-tem Empfangsknoten nicht aufgebaut werden kann. Abweichend von Gleichung (1) wird $V_{ii'} := 0$ definiert und alle definierten Interferenz-Faktoren in der Matrix $\mathbf{V} := [V_{ij}]$ gruppiert, die als Interferenzmatrix des Netzwerkes bezeichnet wird.

Der Signalisierungsablauf mit Nutzung der Sendestrategie des adjungierten Netzwerkes bei der Rück-Signalisierung erfolgt in diesem Fall dann wie folgt:

1. Zuerst werden die Empfangsknoten $i'$, $i$=1,..., 4 , zuverlässig, z.B. durch zeit- oder frequenzseparate Signalisierung, über den Verbindungswunsch durch die entsprechenden Sendeknoten $i$ , $i$=1,..., 4 informiert. Dabei werden möglicherweise bereits Signalisierungsdaten samt Pilotsignalen übertragen.

2. Jeder Empfangsknoten $i'$ , $i$=1,..., 4 , ist im Stande, aus dem Pilotsignal einen zuverlässigen Schätzwert des Kanalkoeffizienten $h_{ii'}$ zu berechnen. Hierzu sind aus dem Stand der Technik zahlreiche, gut bewährte Schätzverfahren bekannt.

3. Die Empfangsknoten $i'$ legen einen gemeinsamen Zeitpunkt der Rück-Signalisierung fest, der nur mit grober Genauigkeit eingehalten werden muss. Seine Bestimmung kann an jedem Empfangsknoten separat, beispielsweise mit Hilfe von so genannten Zeitstempeln, Signaturbits oder des globalen Lokalisierungssystems (GPS - *Global Positioning System*) erfolgen.

4. Anschließend erfolgt die Rück-Signalisierung durch Sendestrategie des adjungierten Netzwerkes: Alle Empfangsknoten $i'$ starten die Rück-Signalisierung zu dem vorhin bestimmten Zeitpunkt. Dabei wird das Sendesignal jedes Empfangsknotens $i'$, $i$=1,..., 4 , mit der inversen des berechneten Kanalschätzwertes, d.h. mit $\frac{1}{h_{ii'}}$ , multipliziert. Diese Multiplikation entspricht im Sinne der Mobilkommunikation der Vorentzerrung bei flachem Kanalschwund und ist ebenfalls aus dem Stand der Technik hinlänglich bekannt. Im allgemeinen Fall des frequenzselektiven Kanalschwunds wären die Sendesignale mit der Impulsantwort des invertierten Kanalfrequenzganges zu falten.

Die Leistungspegel der Sendesignale und die beinhaltete Information hängen im Schritt 4) von dem verwendeten Algorithmus der Online-Ressourcen-Allokation ab. Bei der Rück-Signalisierung übernehmen die Empfangsknoten die Rolle der Sendeknoten und umgekehrt, die Sendeknoten werden zu Empfangsknoten. Aus dem Stand der Technik folgt ebenfalls, dass während der Rück-Signalisierung gemäß Schritt 4) die Interferenzmatrix $\mathbf{U}$ des entstandenen Netzwerkes mit dem beschriebenen Rollentausch gleich der transponierten Matrix des ursprünglichen Netzwerkes ist, d.h. $\mathbf{U} = \mathbf{V}^T$. Mathematisch gesehen entspricht die Transposition in dem betrachteten Fall des endlich-dimensionalen separablen Matrizen-Raumes also dem übergeordneten Begriff der Adjunktion in der Operator-Theorie. Daher wird für das beschriebene Rück-Signalisierungsschema der Name der Sendestrategie des adjungierten Netzwerkes verwendet.

**b. Best-Effort-Kriterium der Sendeleistungsallokation im ad-hoc Netzwerk**

Es wird ein ad-hoc Netzwerk betrachtet wie oben beschrieben. Diesmal mit einer allgemeinen Anzahl $K$ der Sendeknoten und gleicher Anzahl der Empfangsknoten. Es werden also $K$ gleichzeitig aktive Verbindungen angenommen, jeweils zwischen dem Sendeknoten $i$ und dem Empfangsknoten $i'$ , $i$=1,..., $K$ . Die Verbindungen werden mit dem Index des jeweiligen Sendeknotens indiziert. Bei der Annahme von linearen Empfängern wird die Güte des Empfangs jeder Verbindung durch das Niveau des dazugehörigen SINRs wiedergegeben. Das SINR der $i$-ten Verbindung, bezeichnet als $\gamma_i$, kann als Funktion aller Sendeleistungen $\mathbf{p} = (p_1, ...., p_k)$ in der Form

$$\gamma_i = \gamma_i(\mathbf{p}) = \frac{p_i}{\sum_{k=1,\,k\neq i}^{K} V_{ki'} p_k + n_{i'}}, \quad i = 1,\ldots,K, \tag{2}$$

dargestellt werden, wobei $n_{i'}$ die Rauschleistung am $i'$-ten Empfangsknoten bezeichnet. Der SINR-abhängige QoS-Parameter der $i$-ten Verbindung kann als Funktion $\gamma_i \to \phi(\gamma_i)$ ausgedrückt werden. Die Betrachtung kann ohne Einschränkung der Allgemeinheit auf nicht-steigende Funktionen $\phi$ beschränkt werden, da für nicht-fallende Funktionen $\phi(\gamma)$, wie z.B. die Datenrate, die negative Funktion betrachtet werden kann, was ebenfalls allgemein bekannt ist. Standard-Beispiele von QoS-Parametern sind $\phi(\gamma) =- \log(1 + \gamma)$ als negative Datenrate oder $\phi(\gamma) = \frac{1}{\gamma}$ als Abfall der Bitfehlerrate. Im Allgemeinen kann zwischen verschiedenen QoS-Parametern aus einer gewissen Klasse gewählt werden, ohne die effiziente Online-Lösbarkeit des Problems der Sendeleistungsallokation nach dem Best-Effort-Kriterium zu zerstören. Dabei können auch für jede Verbindung unterschiedliche QoS-Parameter aus dieser Klasse nominiert werden.

Die Zielfunktion der Optimierung der Sendeleistungsallokation beim Best-Effort-Kriterium nimmt dann die Form einer linear gewichteten Summe von QoS-Parametern an, d.h.

$$f(\mathbf{p}) = \sum_{i=1}^{K} \alpha_i \phi(\gamma_i(\mathbf{p})), \quad 0 \leq \alpha_i \leq 1, \quad i = 1,\ldots,K. \tag{3}$$

Die Zielfunktion stellt ein intuitives globales Maß für die Servicequalität des gesamten Netzwerkes dar. Die normierten Gewichte $\alpha_i$ korrespondieren dabei zu den Prioritäten der Verbindungen, die meistens durch die Datenverkehrsart bestimmt sind. Die optimale Sendeleistungsallokation im Best-Effort-Sinne resultiert aus der Lösung des Problems

$$\min_{\mathbf{p}\in P} f(\mathbf{p}), \quad P = \{\mathbf{p} : 0 \leq \mathbf{p} \leq \mathbf{p}_{\max}\}, \tag{4}$$

mit dem Vektor $\mathbf{p}_{\max} = (p_1^{\max},\ldots,p_K^{\max})$ als Vektor der Sendeleistungsbeschränkungen der Sendeknoten. Das Best-Effort-Kriterium und das dazugehörige Optimierungsproblem wurden in der Literatur bereits sowohl im Zusammenhang mit verdrahteten als mit drahtlosen Netzwerke behandelt.

**c. Iterative Optimierung der Sendeleistungsallokation**

Die Berechnung der optimalen Sendeleistungsallokation, wie z.B. die Berechnung der Lösung zu dem Problem gemäß Gleichung (4) im Falle des Best-Effort-Kriteriums, erfolgt in den allermeisten Netzwerken iterativ. Hierzu werden gut entwickelte und aus dem Stand der Technik gut bekante Methoden der iterativen Optimierung genutzt. Dabei sei $f$ die Zielfunktion eines beliebigen Kriteriums der Sendeleistungsallokation, wie z.B. Gleichung (3). Die Standardform der Iterationsschleife (der $n$-ten Iterationsschleife, $n \in N$) eines Algorithmus der Sendeleistungsallokation kann demnach wie folgt beschrieben werden. Dabei sind alle Abhängigkeiten und Transformationen in der Iteration parametrisiert durch Kanalzustände, Rauschpegel und andere Systemparameter. Der Einfachheit halber wird es in der Notation nicht explizit dargestellt.

1. Allokation $\mathbf{p}(n-1)$ als Erge $\mathbf{x}(n-1) := H(\mathbf{p}(n-1))$, $H : R_+^K \to I \subseteq R^K$.
2. Bijektive Transformation
3. Berechnung der Schrittweite $s=s(\mathbf{x}(n-1))$, z.B. gemäß des bekannten *Backtracking*-Verfahrens.
4. Berechnung der Suchrichtung $\Delta\mathbf{x}(n) =\Delta\mathbf{x}(\mathbf{x}(n-1))$, z.B. [3]

- $\Delta\mathbf{x}(n) =-\nabla^2 f(\mathbf{x}(n-1))^{-1}\nabla f(\mathbf{x}(n-1))$ bei der Newton-Methode,
- $\Delta\mathbf{x}(n) = \arg\min\{\nabla f(\mathbf{x}(n-1))^T \mathbf{v} \mid\mid\mid \mathbf{v} \mid\mid_1 =1\}$ bei der *Steepest-Descent*-Methode,
- $\Delta\mathbf{x}(n) = -\mathbf{T}(\mathbf{x}(n-1))^{-1}\nabla f(\mathbf{x}(n-1))$, m it $\mathbf{T}(\mathbf{x}(n-1))$ als einer Methoden-spezifischen Matrix-Funktion, bei allen Quasi-Newton Methoden (*BFGS*-Methode, Methode der konjugierten Gradienten, etc.),

- Δ**x**(*n*) = -∇*f*(**x**(*n*-1)) bei der Gradienten-Methode. *Bemerkung* : In allen zuvor aufgezeigten Methoden zur Berechnung der Suchrichtung ist immer eine Gradientenbildung erforderlich

5. Berechnung der neuen transformierten Allokation **x**(*n*) = **x**(*n*-1) + *s*Δ**x**(*n*).
6. Berechnung der Rücktransformation **p**(*n*) := $H^{-1}$(**x**(*n*)).
7. Substitution *n* := *n*+1, zurück zu 1).

Die bijektive Transformation und Rücktransformation in den Schritten 2) und 6) muss nicht in jeder Iteration durchgeführt werden, d.h. die vorgestellte Iterationsform kann auch als eine Optimierungsiteration über **x** als direktem Argument betrachtet werden. Möglicherweise ist jedoch die Rücktransformation zu **p** in Abständen von einigen Iterationen sinnvoll, um die Sendeleistungen direkt zu kontrollieren, z.B. im Bezug auf eine Überschreitung der zulässigen Sendeleistungspegel. Die Form der Transformation *H* kann einen entscheidenden Einfluss auf die Konvergenzeigenschaften des Algorithmus haben.

**Ausführungsbeispiel**

Mit dem Signalisierungsverfahren nach der Erfindung wird die Nutzung der Sendestrategie des adjungierten Netzwerkes als Rück-Signalisierungsschema bei der Berechnung der Suchrichtung, d.h. beim Schritt 4) der in Abschnitt c) vorgestellten Iterationsform und in allen iterativen Methoden der Optimierung Gemäß Gleichung (3), d.h. bei der Optimierung der Sendeleistungsallokation gemäß des Best-Effort-Kriteriums, beansprucht. Das folgende Beispiel zeigt einen detaillierten Ablauf der Signalisierung und Rück-Signalisierung nach dem Signalisierungsverfahren nach der Erfindung unter Anwendung eines iterativen Optimierungsalgorithmus gemäß Abschnitt c).

Beispiel für ein ad-hoc Netzwerk mit dem Best-Effort-Kriterium mit der Datenrate als QoS-Parameter unter Anwendung der Gradienten-Optimierungsmethode mit fester Schrittweite:

Es wird das ad-hoc Netzwerk, wie oben beschrieben, mit *K* Sende- und Empfangsknoten, flachem Kanalschwund, individuellen Sendeleistungsbeschränkungen eines jeden Knoten und CDMA-Mediumzugriff angenommen. Beim Best-Effort-Kriterium wird die Datenrate als der einzig relevante QoS-Parameter festgelegt. Die (negative) Datenrate der Verbindung wird als Funktion des dazugehörigen SINRs mit φ(γ) = -log(γ) approximiert. Damit nimmt die Zielfunktion gemäß Gleichung (3) die Form

$$f(\mathbf{p}) = -\sum_{i=1}^{K} \alpha_i \log(\gamma_i(\mathbf{p})), \quad 0 \le \alpha_i \le 1, \quad i = 1, ..., K \tag{5}$$

an. Die Schrittweite der iterativen Optimierung wird fest gleich *s* definiert und ist an allen Netzwerk-Knoten bekannt. Es wird keine Transformation *H* des Argumentes verwendet, bzw. es wird eine Identitätstransformation *H*(**p**) = **Ip** verwendet. Aus dem Stand der Technik folgt, dass der Gradient von (5) durch

$$\nabla f(\mathbf{p}) = \mathbf{g}(\mathbf{p}) - \mathbf{V}^T \Gamma(\mathbf{p})\mathbf{g}(\mathbf{p}), \tag{6}$$

mit

$$\Gamma(\mathbf{p}) := diag(\gamma_1(\mathbf{p}), ..., \gamma_K(\mathbf{p})) \tag{7}$$

und

$$g(\mathbf{p}) = (q_1(\mathbf{p}), ..., g_K(\mathbf{p})),$$

mit

$$g_i(\mathbf{p}) = g_i(p_i) := \frac{\alpha_i}{p_i} \qquad\qquad (8)$$

ausgedrückt werden kann.

Der Aufbau der Verbindungen erfolgt gemäß der Schritte 1) und 2) im Abschnitt a). Jeder Sendeknoten *i* signalisiert dem entsprechenden Empfangsknoten *i'* zuverlässig seinen Verbindungswunsch und informiert ihn über die Priorität $\alpha_i$, der bevorstehenden Verbindung. Jeder Empfangsknoten *i* berechnet aus empfangenen Pilotsignalen den Schätzwert des Kanalkoeffizienten $h_{ii'}$. Mit Hilfe von Zeitstempeln oder des GPS-Systems legt jeder Empfangsknoten ein Zeitraster der synchronen Rück-Signalisierung fest, wie im Schritt 3) des Abschnitts a) beschrieben. Ein entsprechend verschobenes Zeitraster der synchronen Sendung legen ebenfalls die Sendeknoten fest. Nach dieser Initialisierungsphase erfolgen Iterationen der Optimierungsprozedur, die die Optimierungsiterationen nach der Gradienten-Methode (Spezialfall der Form im Abschnitt c) mit der Signalisierung und Rück-Signalisierung aus Abschnitt a) verbindet. Die *n*-te Iteration, $n \in N$, kann wie folgt beschrieben werden.

1. Alle Sendeknoten senden synchron in dem festgelegten Zeitraster mit Leistungen der Allokation $\mathbf{p}(n\text{-}1) \in P$, die aus der ($n$-1)-ten Iteration resultierte.

2. Jeder Empfangsknoten *i'* empfängt ein Signal mit der Leistung

$$r_{i'}(\mathbf{p}(n-1)) = p_i(n-1) + \sum_{j \neq i} V_{ji'} p_j(n-1) + n_{i'}. \qquad\qquad (9)$$

3. Bei Mittelung über eine Reihe von Pilot- oder Datensymbolen kann an jedem Empfangsknoten *i'* die Sendeleistung $p_i$ und später die gesamte Rausch- und Interferenzleistung

$$r_{i'}(\mathbf{p}(n-1)) - p_i(n-1) = \sum_{j \neq i} V_{ji'} p_j(n-1) + n_{i'} \qquad\qquad (10)$$

bestimmt werden. Damit ist an jedem Empfangsknoten *i'* auch das SINR der Verbindung

$$\gamma_i(\mathbf{p}(n-1)) = \frac{p_i(n-1)}{\sum_{j \neq i} V_{ji'} p_j(n-1) + n_{i'}} \qquad\qquad (11)$$

bekannt.

4. Jeder Empfangsknoten *i'* überträgt zu dem Sendeknoten *i* zuverlässig, z.B. durch zeit- oder frequenzseparate Sendung, den Wert $g_i(p_i(n-1)) = \frac{\alpha_i}{p_i(n-1)}$.

5. Jeder Empfangsknoten *i'* wählt für seine Sendeleistung den Wert $\gamma_i(\mathbf{p}(n\text{-}1))g_i(p_i(n\text{-}1))$. Alle Empfangsknoten senden mit den gewählten Leistungen mit der Sendestrategie des adjungierten Netzwerkes gemäß oben aufgezeigter Definition bzw. gemäß Schritt 4) im Abschnitt a).
Dies bedeutet, dass die tatsächlich ausgesendete Leistung des *i'* - ten Empfangsknoten $\gamma_i(\mathbf{p}(n\text{-}1))g_i(p_i(n\text{-}1))/|h_{ii'}|^2$ beträgt.

6. Jeder Sendeknoten i empfängt dabei ein Signal mit der Leistung

$$r_i^*(\mathbf{p}(n-1)) = \gamma_i(\mathbf{p}(n-1))g_i(p_i(n-1)) + \sum_{j\neq i} V_{ij}\gamma_j(\mathbf{p}(n-1))g_j(p_j(n-1)) + n_i^*. \quad (12)$$

7. Ähnlich zu Schritt 3) im Abschnitt a) wird bei der Mittelung über eine Reihe von Pilot- oder Datensymbolen an jedem Sendeknoten i die Sendeleistung $\gamma_i(\mathbf{p}(n-1))g_i(p_i(n-1))$ des zugehörigen Empfangsknoten $i$ bestimmt.

8. Mit der Kenntnis der Rauschleistung $n_i^*$ (Empfänger-spezifische Größe), $g_i(p_i(n-1))$ und $\gamma_i(\mathbf{p}(n-1))g_i(p_i(n-1))$ bildet jeder Sendeknoten $i$ die Summe

$$\delta_i(\mathbf{p}(n-1)) = r_i^*(\mathbf{p}(n-1)) - \gamma_i(\mathbf{p}(n-1))g_i(p_i(n-1)) + g_i(p_i(n-1)) - n_i^*$$
$$= g_i(p_i(n-1)) + \sum_{j\neq i} V_{ij}\gamma_j(\mathbf{p}(n-1))g_j(p_j(n-1)), \quad (13)$$

die der partiellen Ableitung von Gleichung (5) nach der $i$-ten Sendeleistung, bzw. der $i$-ten Komponente des Gradienten gemäß Gleichung (6) entspricht.

9. Jeder Sendeknoten i aktualisiert seine Sendeleistung gemäß

$$p_i(n) = p_i(n-1) - s\delta_i(\mathbf{p}(n-1)). \quad (14)$$

Die Gesamtheit dieser lokalen Aktualisierungen entspricht dem allgemeinen Aktualisierungsschritt 5) aus Abschnitt b).

10. Sollte die aktualisierte Sendeleistung $p_i(n)$ die maximal zulässige Sendeleistung $p_i^{\text{max}}$ des $i$-ten Sendeknoten überschreiten, so wird die Sendeleistung auf $p_i(n) = p_i^{\text{max}}$ zurückgesetzt.

11. Substitution $n := n+1$ und Übergang zu Schritt 1).

Der bedeutsame Vorteil des Signalisierungsverfahrens nach der Erfindung wird an dem zuvor aufgezeigten Ausführungsbeispiel sehr gut erkennbar. Die Nutzung der Sendestrategie des adjungierten Netzwerkes bei der Rück-Signalisierung (Schritt 5) im Ausführungsbeispiel ermöglicht die Bereitstellung der Kenntnis der partiellen Ableitung der Zielfunktion nach der $i$-ten Sendeleistung an jedem $i$-ten Sendeknoten, ohne jegliche Kooperation zwischen den Empfangsknoten und zwischen den Sendeknoten. Es kann leicht gezeigt werden, dass dies nicht nur im Falle der Gradienten-Methode im Beispiel, sondern zumindest auch im Falle jener iterativen Optimierungsmethoden gilt, die eine Berechnung der Suchrichtung (Schritt 4) im Abschnitt b) gemäß

$$\Delta\mathbf{x}(n) = -diag(\mathbf{t})\nabla f(\mathbf{x}(n-1)) \quad (15)$$

vorschreiben, wobei die Diagonalmatrix von dem aktuellen Wert der Optimierungsvariablen abhängig sein kann. Die Gesamtheit der Kenntnisse der partiellen Ableitungen der Zielfunktion an den Sendeknoten ermöglicht eine dezentralisierte Ausführung des Aktualisierungsschrittes des Optimierungsalgorithmus (Schritt 5) im Abschnitt b). Die einzige Voraussetzung zur Nutzung der Sendestrategie des adjungierten Netzwerkes bei der Rück-Signalisierung ist die grobe Synchronität, wie in der i.a. Definition erklärt. Diese kann jedoch in der Praxis ohne größere Probleme gewährleistet werden.

Die Betrachtung des Ausdrucks der partiellen Ableitung gemäß Gleichung (13) ermöglicht auch eine Art quantitativen Aufwandsvergleich mit einer einfachen Alternativmethode der Rück-Signalisierung. Der Interferenzterm auf der rechten Seite von Gleichung (13) kann durch eine einmalige synchrone Sendung - durch die Nutzung der Sendestrategie des adjungierten Netzwerkes - dem Sendeknoten bereitgestellt werden. Eine einfache alternative Rück-Signalisierung zur Bereitstellung dieses Interferenzterms für den Sendeknoten *i* besteht in einer Reihe zeitseparater Rück-Signalisierungen von allen Empfangsknoten $j'$, $j \neq i$, mit den Sendeleistungen $\gamma_j(\boldsymbol{p}(n\text{-}1))g_j(p_j(n\text{-}1))$. Um diese durchzuführen, ist eine fixierte Sendereihenfolge aller Empfangsknoten *j'* nötig, die nur mit Hilfe einer zusätzlichen Signalisierung festgelegt werden kann. Die Rück-Signalisierung als Reihe von zeitseparaten Sendungen nimmt auch entsprechend mehr Zeit in Anspruch als das Signalisierungsverfahren nach der Erfindung und vergrößert damit die Trägheit der gesamten (Re-) Allokationsprozedur. Bei der Annahme von *K* gleichzeitig aktiven Verbindungen kann daher zusammenfasst gesagt werden, dass die Rück-Signalisierung mit Nutzung der Sendestrategie des adjungierten Netzwerkes mit 1/*K* des Signalisierungsaufwandes und 1/*K* der Signalisierungszeit dieser alternativen Methode auskommt. Dadurch ergeben sich geräte- und nutzertechnische bedeutsame Vorteile in einem Ad-hoc-Netz.

**Patentansprüche**

1. Signalisierungsverfahren zur Umsetzung von für elastischen Datenverkehr nach dem Best-Effort-Prinzip konzipierten iterativen Algorithmen zur dezentralisierten Online-Sendeleistungsallokation in einem drahtlosen Netz mit i Sendeknoten und i' Empfangsknoten, die aktuelle, direkt verbundene Verbindungspaare ii' bilden, in einem interferierenden Übertragungskanal, dessen reziprokes Übertragungsverhalten bei den Empfangsknoten i' bekannt ist, in dem ein primäres Netz durch einen drahtlosen Datenverkehr aus zu übertragenden Informationsdaten und netzsteuernden Signalisierungsdaten im interferierenden Übertragungskanal von den Sendeknoten i zu den Empfangsknoten i' in jedem Verbindungspaar ii' definiert wird,
wobei das primäre Netz auch gerichtete orthogonale niederratige Kontrollkanäle und Rückkanäle in jedem Verbindungspaar ii' umfasst,
und
**in dem** ein adjungiertes Netz durch einen drahtlosen Datenverkehr aus den Signalisierungsdaten im interferierenden Übertragungskanal von den Empfangsknoten i' zu den Sendeknoten i in jedem Verbindungspaar ii' definiert wird,
**wobei** das primäre Netz und das adjungierte Netz während des drahtlosen Datenverkehrs alternierend zur Bereitstellung der zur iterativen Gradientenbildung in einem ausgewählten iterativen Gradienten-basierten Algorithmus nötigen Information über den aktuellen Leistungszustand im Netz genutzt werden,
**wobei** im primären Netz

   - Signalisierungsdaten global synchron in einem zwischen allen Sendeknoten i vereinbarten Zeitraster über den interferierenden Übertragungskanal gesendet werden,
   - Signalisierungsdaten lokal über die Kontrollkanäle in jedem Verbindungspaar ii' bezüglich der veränderlichen Wichtung der Verbindungsprioritäten gesendet werden,
   - Signalisierungsdaten lokal über die Rückkanäle in jedem Verbindungspaar ii' bezüglich des aktuellen Zustandes des Übertragungskanals gesendet werden und
   - eine erste Sendeleistungsanpassung in den Sendeknoten i durchgeführt wird

   und
   **wobei** im adjungierten Netz

   - an den Empfangsknoten i' die Signalisierungsdaten zur Kompensation des Einflusses des jeweils in einem Verbindungspaar ii' gebildeten gerichteten Übertragungskanals auf den interferierenden Übertragungskanal vorverzerrt werden,
   - die vorverzerrten Signalisierungsdaten global synchron in einem zwischen allen Empfangsknoten i' vereinbarten Zeitraster über den interferierenden Übertragungskanal zu den Sendeknoten i in den Verbindungspaaren ii' gesendet werden

   und

   - in den Sendeknoten i aus den empfangenen vorverzerrten Signalisierungsdaten die zur Berechnung der i-ten Gradienten-Komponenten im ausgewählten iterativen Algorithmus nötige Information über den Leistungszustand im Netz ermittelt wird.

2. Sendeknoten für ein drahtloses Netz mit dezentraler Online-Sendeleistungsallokation gemäß einem für elastischen Datenverkehr nach dem Best-Effort-Prinzip konzipierten iterativen Algorithmus , wobei das drahtlose Netz Sendeknoten i und Empfangsknoten i', die aktuelle, direkt verbundene Verbindungspaare ii' bilden, und einen interferierenden Übertragungskanal aufweist, dessen reziprokes Übertragungsverhalten bei den Empfangsknoten i' bekannt ist, wobei ein primäres Netz durch einen drahtlosen Datenverkehr aus zu übertragenden Informationsdaten und netzsteuernden Signalisierungsdaten im interferierenden Übertragungskanal von den Sendeknoten i zu den Empfangsknoten i' in jedem Verbindungspaar ii' definiert ist, und das primäre Netz auch gerichtete orthogonale niederratige Kontrollkanäle und Rückkanäle in jedem Verbindungspaar ii' umfasst, und wobei ein adjungiertes Netz durch einen drahtlosen Datenverkehr aus den Signalisierungsdaten im interferierenden Übertragungskanal von den Empfangsknoten i' zu den Sendeknoten i in jedem Verbindungspaar ii' definiert ist, wobei der Sendeknoten ausgebildet ist, um während des drahtlosen Datenverkehrs das primäre Netz und das adjungierte Netz alternierend zur Bereitstellung der zur iterativen Gradientenbildung in einem ausgewählten iterativen Gradienten-basierten Algorithmus nötigen Information über den aktuellen Leistungszustand im Netz zu nutzen, und zwar durch

- Mittel zum Senden, im primären Netz, von Datensymbolen und Pilotsymbolen synchron zu den anderen Sendeknoten in einem zwischen allen Sendeknoten i vereinbarten Zeitraster über den interferierenden Übertragungskanal,
- Mittel zum Empfangen, im primären Netz, eines an dem zugehörigen Empfangsknoten durch Mittelung über die Pilot- oder Datensymbole bestimmten Signal-zu-Interferenzverhältnis oder einer hiervon abhängigen Funktion lokal über den Kontrollkanal,
- Mittel zum Empfangen, im adjungierten Netz, eines Signals, das aus einer global synchronen, in einem zwischen allen Empfangsknoten i' vereinbarten Zeitraster über den interferierenden Übertragungskanal durchgeführten Sendung von Signalisierungsdaten von den Empfangsknoten i' zu den Sendeknoten i in den Verbindungspaaren ii' resultiert, die zur Kompensation des Einflusses des jeweils in einem Verbindungspaar ii' gebildeten gerichteten Übertragungskanals auf den interferierenden Übertragungskanal vorverzerrt sind, und
- Mittel zum Ermitteln, aus den empfangenen vorverzerrten

Signalisierungsdaten, der zur Berechnung der i-ten Gradientenkomponenten im ausgewählten iterativen Algorithmus nötigen Information über den Leistungszustand im Netz.

3. Sendeknoten gemäß Anspruch 2, bei dem die Mittel zum Ermitteln der zur Berechnung der i-ten Gradientenkomponenten im ausgewählten iterativen Algorithmus nötigen Information über den Leistungszustand im Netz ausgebildet sind,

- eine Sendeleistung des zugehörigen Empfangsknotens aus den vorverzerrten Signalisierungsdaten zu schätzen, und
- die i-ten Gradientenkomponenten im ausgewählten iterativen Algorithmus auf Basis der geschätzten Sendeleistung und dem Signal-zu-Interferenzverhältnis bzw. der hiervon abhängigen Funktion zu berechnen.

4. Empfangsknoten für ein drahtloses Netz mit dezentraler Online-Sendeleistungsallokation gemäß einem für elastischen Datenverkehr nach dem Best-Effort-Prinzip konzipierten iterativen Algorithmus , wobei das drahtlose Netz Sendeknoten i und Empfangsknoten i', die aktuelle, direkt verbundene Verbindungspaare ii' bilden, und einen interferierenden Übertragungskanal aufweist, dessen reziprokes Übertragungsverhalten bei den Empfangsknoten i' bekannt ist, wobei ein primäres Netz durch einen drahtlosen Datenverkehr aus zu übertragenden Informationsdaten und netzsteuernden Signalisierungsdaten im interferierenden Übertragungskanal von den Sendeknoten i zu den Empfangsknoten i' in jedem Verbindungspaar ii' definiert ist, und das primäre Netz auch gerichtete orthogonale niederratige Kontrollkanäle und Rückkanäle in jedem Verbindungspaar ii' umfasst, und ein adjungiertes Netz durch einen drahtlosen Datenverkehr aus den Signalisierungsdaten im interferierenden Übertragungskanal von den Empfangsknoten i' zu den Sendeknoten i in jedem Verbindungspaar ii' definiert ist, wobei der Empfangsknoten ausgebildet ist, um während des drahtlosen Datenverkehrs das primäre Netz und das adjungierte Netz alternierend zur Bereitstellung der zur iterativen Gradientenbildung in einem ausgewählten iterativen Gradienten-basierten Algorithmus nötigen Information über den aktuellen Leistungszustand im Netz zunutzen, und zwar durch

- Mittel zum Empfangen, im primären Netz, eines Signals, das aus einer synchronen, in einem zwischen allen Sendeknoten i vereinbarten Zeitraster über den interferierenden Übertragungskanal durchgeführten Sendung von Datensymbolen und Pilotsymbolen von den Sendeknoten i- zu den Empfangsknoten i' in den Verbindungspaaren ii' resultiert,
- Mittel zum Bestimmen eines Signal-zu-Interferenzverhältnis oder einer hiervon abhängigen Funktion durch Mittelung über die Pilot- oder Datensymbole,
- Mittel zum Senden, im primären Netz, des Signal-zu-Interferenzverhältnis bzw. der hiervon abhängigen Funktion lokal über den Kontrollkanal zu dem zugehörigen Sendeknoten, und
- Mittel zum Senden, im adjungierten Netz, von Signalisierungsdaten global synchron zu den anderen Empfangsknoten in einem zwischen allen Empfangsknoten i' vereinbarten Zeitraster über den interferierenden Übertragungskanal, und zwar unter Vorverzerrung der Signalisierungsdaten unter Verwendung des Signal-zu-Interferenzverhältnis bzw. der hiervon abhängigen Funktion.

5. Drahtloses Netz mit dezentraler Online-Sendeleistungsallokation gemäß einem für elastischen Datenverkehr nach dem Best-Effort-Prinzip konzipierten iterativen Algorithmus, wobei das drahtlose Netz Sendeknoten i und Empfangsknoten i', die aktuelle, direkt verbundene Verbindungspaare ii' bilden, und einen interferierenden Übertragungskanal aufweist, dessen reziprokes Übertragungsverhalten bei den Empfangsknoten i' bekannt ist, wobei ein primäres Netz durch einen drahtlosen Datenverkehr aus zu übertragenden Informationsdaten und netzsteuernden Signalisierungsdaten im interferierenden Übertragungskanal von den Sendeknoten i zu den Empfangsknoten i' in jedem Verbindungspaar ii' definiert ist, und das primäre Netz auch gerichtete orthogonale niederratige Kontrollkanäle und Rückkanäle in jedem Verbindungspaar ii' umfasst, und wobei ein adjungiertes Netz durch einen drahtlosen Datenverkehr aus den Signalisierungsdaten im interferierenden Übertragungskanal von den Empfangsknoten i' zu den Sendeknoten i in jedem Verbindungspaar ii' definiert ist, wobei das drahtlose Netz derart ausgebildet ist, dass das primäre Netz und das adjungierte Netz während des drahtlosen Datenverkehrs alternierend zur Bereitstellung der zur iterativen Gradientenbildung in einem ausgewählten iterativen Gradienten-basierten Algorithmus nötigen Information über den aktuellen Leistungszustand im Netz genutzt werden, und zwar indem
im primären Netz

- Signalisierungsdaten global synchron in einem zwischen allen Sendeknoten i vereinbarten Zeitraster über den interferierenden Übertragungskanal gesendet werden,
- Signalisierungsdaten lokal über die Kontrollkanäle in jedem Verbindungspaar ii' bezüglich der veränderlichen Wichtung der Verbindungsprioritäten gesendet werden,
- Signalisierungsdaten lokal über die Rückkanäle in jedem Verbindungspaar ii' bezüglich des aktuellen Zustandes des Übertragungskanals gesendet werden und
- eine erste Sendeleistungsanpassung in den Sendeknoten i durchgeführt wird

und
im adjungierten Netz

- an den Empfangsknoten i' die Signalisierungsdaten zur Kompensation des Einflusses des jeweils in einem Verbindungspaar ii' gebildeten gerichteten Übertragungskanals auf den interferierenden Übertragungskanal vorverzerrt werden,
- die vorverzerrten Signalisierungsdaten global synchron in einem zwischen allen Empfangsknoten i' vereinbarten Zeitraster über den interferierenden Übertragungskanal zu den Sendeknoten i in den Verbindungspaaren ii' gesendet werden

und

- in den Sendeknoten i aus den empfangenen vorverzerrten Signalisierungsdaten die zur Berechnung der i-ten Gradientenkomponenten im ausgewählten iterativen Algorithmus nötige Information über den Leistungszustand im Netz ermittelt wird.

6. Verfahren zum Betreiben eines Sendeknotens für ein drahtloses Netz mit dezentraler Online-Sendeleistungsallokation gemäß einem für elastischen Datenverkehr nach dem Best-Effort-Prinzip konzipierten iterativen Algorithmus , wobei das drahtlose Netz Sendeknoten i und Empfangsknoten i', die aktuelle, direkt verbundene Verbindungspaare ii' bilden, und einen interferierenden Übertragungskanal aufweist, dessen reziprokes Übertragungsverhalten bei den Empfangsknoten i' bekannt ist, wobei ein primäres Netz durch einen drahtlosen Datenverkehr aus zu übertragenden Informationsdaten und netzsteuernden Signalisierungsdaten im interferierenden Übertragungskanal von den Sendeknoten i zu den Empfangsknoten i' in jedem Verbindungspaar ii' definiert ist, und das primäre Netz auch gerichtete orthogonale niederratige Kontrollkanäle und Rückkanäle in jedem Verbindungspaar ii' umfasst, und wobei ein adjungiertes Netz durch einen drahtlosen Datenverkehr aus den Signalisierungsdaten im interferierenden Übertragungskanal von den Empfangsknoten i' zu den Sendeknoten i in jedem Verbindungspaar ii' definiert ist, wobei während des drahtlosen Datenverkehrs das primäre Netz und das adjungierte Netz alternierend zur Bereitstellung der zur iterativen Gradientenbildung in einem ausgewählten iterativen Gradienten-basierten Algorithmus nötigen Information über den aktuellen Leistungszustand im Netz genutzt werden, und zwar durch

- Senden, im primären Netz, von Datensymbolen und Pilotsymbolen synchron zu den anderen Sendeknoten in einem zwischen allen Sendeknoten i vereinbarten Zeitraster über den interferierenden Übertragungskanal,
- Empfangen, im primären Netz, eines an dem zugehörigen Empfangsknoten durch Mittelung über die Pilot- oder Datensymbole bestimmten Signal-zu-Interferenzverhältnis oder einer hiervon abhängigen Funktion lokal über den Kontrollkanal
- Empfangen, im adjungierten Netz, eines Signals, das aus einer global synchronen, in einem zwischen allen Empfangsknoten i' vereinbarten Zeitraster über den interferierenden Übertragungskanal durchgeführten Sendung von Signalisierungsdaten von den Empfangsknoten i' zu den Sendeknoten i in den Verbindungspaaren ii' resultiert, die zur Kompensation des Einflusses des jeweils in einem Verbindungspaar ii' gebildeten gerichteten Übertragungskanals auf den interferierenden Übertragungskanal vorverzerrt sind, und
Ermitteln, aus den empfangenen vorverzerrten Signalisierungsdaten, der zur Berechnung der i-ten Gradientenkomponenten im ausgewählten iterativen Algorithmus nötigen Information über den Leistungszustand im Netz.

7. Verfahren zum Betreiben eines Empfangsknotens für ein drahtloses Netz mit dezentraler Online-Sendeleistungsallokation gemäß einem für elastischen Datenverkehr nach dem Best-Effort-Prinzip konzipierten iterativen Algorithmus , wobei das drahtlose Netz Sendeknoten i und Empfangsknoten i', die aktuelle, direkt verbundene Verbindungspaare ii' bilden, und eine interferierenden Übertragungskanal aufweist, dessen reziprokes Übertragungsverhalten bei den Empfangsknoten i' bekannt ist, wobei ein primäres Netz durch einen drahtlosen Datenverkehr aus zu übertragenden Informationsdaten und netzsteuernden Signalisierungsdaten im interferierenden Übertragungskanal von den Sendeknoten i zu den Empfangsknoten i' in jedem Verbindungspaar ii' definiert ist, und das primäre Netz auch gerichtete orthogonale niederratige Kontrollkanäle und Rückkanäle in jedem Verbindungspaar ii' umfasst, und ein adjungiertes Netz durch einen drahtlosen Datenverkehr aus den Signalisierungsdaten im interferierenden Übertragungskanal von den Empfangsknoten i' zu den Sendeknoten i in jedem Verbindungspaar ii' definiert ist, wobei während des drahtlosen Datenverkehrs das primäre Netz und das adjungierte Netz alternierend zur Bereitstellung der zur iterativen Gradientenbildung in einem ausgewählten iterativen Gradienten-basierten Algorithmus nötigen Information über den aktuellen Leistungszustand im Netz genutzt werden, und zwar durch

- Empfangen, im primären Netz, eines Signals, das aus einer synchronen, in einem zwischen allen Sendeknoten i vereinbarten Zeitraster über den interferierenden Übertragungskanal durchgeführten Sendung von Datensymbolen und Pilotsymbolen von den Sendeknoten i zu den Empfangsknoten i' in den Verbindungspaaren ii' resultiert,
- Bestimmen eines Signal-zu-Interferenzverhältnis oder einer hiervon abhängigen Funktion durch Mittelung über die Pilot- oder Datensymbole,
- Senden, im primären Netz, des Signal-zu-Interferenzverhältnis bzw. der hiervon abhängigen Funktion lokal über den Kontrollkanal zu dem zugehörigen Sendeknoten, und
- Senden, im adjungierten Netz, von Signalisierungsdaten global synchron zu den anderen Empfangsknoten in einem zwischen allen Empfangsknoten i' vereinbarten Zeitraster über den interferierenden Übertragungskanal, und zwar unter Vorverzerrung der Signalisierungsdaten unter Verwendung des Signal-zu-Interferenzverhältnis bzw. der hiervon abhängigen Funktion.

## Claims

1. Signaling method for translating iterative algorithms designed according to the best-effort principle for elastic data traffic for decentralized allocation of online transmission power in a wireless network with i transmit nodes and i' receive nodes forming current directly connected connection pairs ii', in an interfering transmission channel whose reciprocal transmission behavior is known at the receive nodes i',
in which a primary network is defined by a wireless data traffic of information data to be transmitted and network-controlling signaling data in the interfering transmission channel from the transmit nodes i to the receive nodes i' in each connection pair ii',
wherein the primary network also includes directional orthogonal low-rate control channels and back channels in each connection pair ii',
and
in which an adjoint network is defined by a wireless data traffic of the signaling data in the interfering transmission channel from the receive nodes i' to the transmit nodes i in each connection pair ii',
wherein the primary network and the adjoint network are alternately used, during the wireless data traffic, for providing the information on the current power state in the network necessary for iterative gradient forming in a selected iterative gradient-based algorithm,

wherein, in the primary network,
signaling data are globally synchronously transmitted via the interfering transmission channel in a time pattern agreed between all transmit nodes i,
signaling data are locally transmitted via the control channels in each connection pair ii' with respect to the changeable weighting of the connection priorities,
signaling data are locally transmitted via the back channels in each connection pair ii' with respect to the current state of the transmission channel and
a first transmission power matching is performed in the transmit nodes i
and
wherein, in the adjoint network,
the signaling data are predistorted at the receive nodes i' for compensating the influence of the transmission channel respectively formed in a connection pair ii' on the interfering transmission channel,
the predistorted signaling data are globally synchronously transmitted in a time pattern agreed between all receive nodes i' via the interfering transmission channel to the transmit nodes i in the connection pairs ii', and
the information on the power state in the network needed for calculating the i-th gradient components in the selected iterative algorithm is calculated, in the transmit nodes i, from the received predistorted signaling data.

2. Transmit node for a wireless network with decentralized allocation of online transmission power according to an iterative algorithm designed according to the best-effort principle for elastic data traffic, the wireless network comprising i transmit nodes and i' receive nodes forming current directly connected connection pairs ii', and an interfering transmission channel whose reciprocal transmission behavior is known at the receive nodes i', wherein
a primary network is defined by a wireless data traffic of information data to be transmitted and network-controlling signaling data in the interfering transmission channel from the transmit nodes i to the receive nodes i' in each connection pair ii', and
the primary network also includes directional orthogonal low-rate control channels and back channels in each connection pair ii',
and
wherein an adjoint network is defined by a wireless data traffic of the signaling data in the interfering transmission channel from the receive nodes i' to the transmit nodes i in each connection pair ii', the transmit node being configured for alternately using, during the wireless data traffic, the primary network and the adjoint network for providing the information on the current power state in the network necessary for iterative gradient forming in a selected iterative gradient-based algorithm, by
means for transmitting data symbols and pilot symbols synchronously to the other transmit nodes via the interfering transmission channel in a time pattern agreed between all transmit nodes i,
means for receiving a signal to interference ratio or a function dependent thereon determined at the associated receive node by notification via the pilot or data symbols, locally via the control channel,
means for receiving, in the adjoint network, a signal resulting from a global synchronous transmission of signaling data, via the interfering transmission channel, in a time pattern agreed upon among all receive nodes i', from the receive nodes i' to the transmit nodes i in the connection pairs ii', which are predistorted for compensating the influence of the transmission channel respectively formed in a connection pair ii' on the interfering transmission channel, and
means for determining, from the received predistorted signaling data, the information on the power state in the network needed for calculating the i-th gradient components in the selected iterative algorithm.

3. Transmit node of claim 2, wherein the means for determining of the information on the power state in the network needed for the calculation of the i-th gradient components in the selected iterative algorithm are implemented for estimating a transmission power of the associated receive node from the predistorted signaling data, and calculating the i-th gradient components in the selected iterative algorithm on the basis on the estimated transmission power and the signal to interference ratio, or a function dependent thereon.

4. Receive node for a wireless network with decentralized allocation of online transmission power according to an iterative algorithm designed according to the best-effort principle for elastic data traffic, the wireless network comprising i transmit nodes and i' receive nodes forming current directly connected connection pairs ii', and an interfering transmission channel whose reciprocal transmission behavior is known at the receive nodes i', wherein
a primary network is defined by a wireless data traffic of information data to be transmitted and network-controlling signaling data in the interfering transmission channel from the transmit nodes i to the receive nodes i' in each connection pair ii', and
the primary network also includes directional orthogonal low-rate control channels and back channels in each connection pair ii',
and
wherein an adjoint network is defined by a wireless data traffic of the signaling data in the interfering transmission channel from the receive nodes i' to the transmit nodes i in each connection pair ii', the receive node being configured for alternately using, during the wireless data traffic, the primary network and the adjoint network for providing the information on the current power state in the network necessary for iterative gradient formation in a selected iterative gradient-based algorithm, by
the means for receiving, in the primary network, a signal resulting from a synchronous transmission of data symbols and pilot symbols, via the interfering transmission channel, in a time pattern agreed upon among all transmit nodes i, from the transmit nodes i to the receive nodes i' in the connection pairs ii',
the means for determining a signal to interference ratio or a function dependent thereon by averaging via the pilot or data symbols,
the means for transmitting the signal to interference ratio, or the function dependent thereon, to the associated transmit node via the control channel in the primary network, and
the means for transmitting, in the adjoint network, signaling data globally synchronously to the other receive nodes, via the interfering transmission channel, in a time pattern agreed upon among all receive nodes i', with the signaling data predistorted, using the signal to interference ratio, or the function dependent thereon.

5. Wireless network with decentralized allocation of online transmission power according to an iterative algorithm designed according to the best-effort principle for elastic data traffic, the wireless network comprising transmit nodes i and receive nodes i', which form current, directly connected connection pairs ii', and an interfering transmission channel, the reciprocal transmission behavior of which is known at the receive nodes i', wherein a primary network is defined by a wireless data traffic of information data to be transmitted and network-controlling signaling data in the interfering transmission channel from the transmit nodes i to the receive nodes i' in each connection pair ii', and the primary network also includes directional orthogonal low-rate control channels and back channels in each connection pair ii', and wherein an adjoint network is defined by a wireless data traffic of the signaling data in the interfering transmission channel from the receive nodes i' to the transmit nodes i in each connection pair ii', wherein the wireless network is configured such that the primary network and the adjoint network are alternately used, during the wireless data traffic, for providing the information on the current power state in the network necessary for iterative gradient formation in a selected iterative gradient-based algorithm, by,
in the primary network,
globally synchronously transmitting signaling data via the interfering transmission channel in a time pattern agreed between all transmit nodes i,
locally transmitting signaling data via the control channels in each connection pair ii' with respect to the changeable weighting of the connection priorities,
locally transmitting signaling data via the back channels in each connection pair ii' with respect to the current state of the transmission channel and
performing a first transmission power matching in the transmit nodes i
and,
in the adjoint network,
predistorting the signaling data at the receive nodes i' for compensating the influence of the transmission channel respectively formed in a connection pair ii' on the interfering transmission channel,
globally synchronously transmitting the predistorted signaling data in a time pattern agreed between all receive nodes i' via the interfering transmission channel to the transmit nodes i in the connection pairs ii', and
calculating, in the transmit nodes i, from the received predistorted signaling data, the information on the power state in the network needed for calculating the i-th gradient components in the selected iterative algorithm.

6. Method of operating a transmit node for a wireless network with decentralized allocation of online transmission power according to an iterative algorithm designed according to the best-effort principle for elastic data traffic, the wireless network comprising transmit nodes i and receive nodes i' forming current directly connected connection pairs ii', and an interfering transmission channel whose reciprocal transmission behavior is known at the receive nodes i', wherein a primary network is defined by a wireless data traffic of information data to be transmitted and network-controlling signaling data in the interfering transmission channel from the transmit nodes i to the receive nodes i' in each connection pair ii', and the primary network also includes directional orthogonal low-rate control channels and back channels in each connection pair ii', and wherein an adjoint network is defined by a wireless data traffic of the signaling data in the interfering transmission channel from the receive nodes i' to the transmit nodes i in each connection pair ii', wherein, during the wireless data traffic, the primary network and the adjoint network are alternately used for providing the information on the current power state in the network necessary for iterative calculation of the search direction in a selected iterative optimization algorithm, by
transmitting data symbols and pilot symbols synchronously to the other transmit nodes via the interfering transmission channel in a time pattern agreed between all transmit nodes i,
receiving a signal to interference ratio or a function dependent thereon determined at the associated receive node by notification via the pilot or data symbols, locally via the control channel,
receiving, in the adjoint network, a signal resulting from a synchronous transmission of signaling data, via the interfering transmission channel, in a time pattern agreed upon among all receive nodes i', from the receive nodes i' to the transmit nodes i in the connection pairs ii', which are predistorted for compensating the influence of the transmission channel respectively formed in a connection pair ii' on the interfering transmission channel, and
determining, from the received predistorted signaling data, the information on the power state in the network needed for calculating the i-th search direction components in the selected iterative algorithm.

7. Method of operating a receive node for a wireless network with decentralized allocation of online transmission power according to an iterative algorithm designed according to the best-effort principle for elastic data traffic, the wireless network comprising transmit nodes i and receive nodes i' forming current directly connected connection pairs ii', and an interfering transmission channel whose reciprocal transmission behavior is known at the receive nodes i', wherein a primary network is defined by a wireless data traffic of information data to be transmitted and network-controlling signaling data in the interfering transmission channel from the transmit nodes i to the receive nodes i' in each connection pair ii', and the primary network also includes directional orthogonal low-rate control channels and back channels in each connection pair ii', and an adjoint network is defined by a wireless data traffic of the signaling data in the interfering transmission channel from the receive nodes i' to the transmit nodes i in each connection pair ii', wherein, during the wireless data traffic, the primary network and the adjoint network are alternately used for providing the information on the current power state in the network necessary for iterative calculation of the search direction in a selected iterative optimization algorithm, by
receiving, in the primary network, a signal resulting from a synchronous transmission of data symbols and pilot symbols, via the interfering transmission channel, in a time pattern agreed upon among all transmit nodes i, from the transmit nodes i to the receive nodes i' in the connection pairs ii',
determining a signal to interference ratio or a function dependent thereon by notification via the pilot or data symbols, transmitting the signal to interference ratio, or the function dependent thereon, to the associated transmit node via the control channel, and
transmitting, in the adjoint network, signaling data synchronously to the other receive nodes, via the interfering transmission channel, in a time pattern agreed upon among all receive nodes i', with the signaling data predistorted, using the signal to interference ratio, or the function dependent thereon.

## Revendications

1. Procédé de signalisation pour la mise en oeuvre d'algorithmes itératifs conçus pour un trafic de données élastique selon le principe du meilleur effort pour l'allocation de puissances d'émission en ligne décentralisée dans un réseau sans fil à i noeuds d'émission et i' noeuds de réception qui constituent des paires de connexion actuelles reliées directement ii' dans un canal de transmission interférant dont le comportement de transmission réciproque est connu dans les noeuds de réception i',
dans lequel un réseau primaire est défini par un trafic de données sans fil composé de données d'informations à transmettre et de données de signalisation commandant le réseau dans le canal de transmission interférant des noeuds d'émission i aux noeuds de réception i' dans chaque paire de connexion ii',
dans lequel le réseau primaire comporte également des canaux de contrôle et canaux de retour à faible débit orthogonaux orientés dans chaque paire de connexion ii',
et
dans lequel un réseau adjoint est défini par un trafic de données sans fil composé de données de signalisation dans le canal de transmission interférant du noeud de réception i' au noeud d'émission i dans chaque paire de connexion ii',
le réseau primaire et le réseau adjoint étant utilisés pendant le trafic de données sans fil en alternance pour la mise à disposition de l'information sur l'état de puissance actuel dans le réseau nécessaire pour la formation itérative de gradients dans un algorithme à base de gradients itératif sélectionné,
dans le réseau primaire

- les données de signalisation étant envoyées de manière globalement synchrone dans une trame de temps convenue entre tous les noeuds d'émission i, via le canal de transmission interférant,
- les données de signalisation étant envoyées localement via les canaux de contrôle dans chaque paire de connexion ii' en ce qui concerne la pondération variable des priorités de connexion,
- les données de signalisation étant envoyées localement via les canaux de retour dans chaque paire de connexion ii' en ce qui concerne l'état actuel du canal de transmission, et
- une première adaptation de puissance d'émission étant effectuée dans les noeuds d'émission i,

et

dans le réseau adjoint

- les données de signalisation étant prédistorsionnées aux noeuds de réception i', pour compenser l'influence du canal de transmission orienté formé respectivement dans une paire de connexion ii' sur le canal de transmission interférant,
- les données de signalisation prédistorsionnées étant envoyées de manière globalement synchrone dans une trame de temps convenue entre tous les noeuds de réception i', via le canal de transmission interférant, aux noeuds d'émission i dans les paires de connexion ii', et
- dans les noeuds d'émission i étant déterminée, à partir des données de signalisation prédistorsionnées reçues, l'information sur l'état de puissance dans le réseau nécessaire pour calculer les i-ièmes composantes de gradients dans l'algorithme itératif sélectionné.

2. Noeud d'émission pour un réseau sans fil à allocation de puissance d'émission en ligne décentralisée selon un algorithme itératif conçu selon le principe du meilleur effort pour un trafic de données élastique, le réseau sans fil présentant des noeuds d'émission i et des noeuds de réception i' qui forment des paires de connexion ii' actuelles reliées directement, et un canal de transmission interférant dont le comportement de transmission réciproque est connu aux noeuds de réception i', un réseau primaire étant défini par un trafic de données sans fil composé de données d'informations à transmettre et de données de signalisation commandant le réseau dans le canal de transmission interférant des noeuds d'émission i aux noeuds de réception i' dans chaque paire de connexion ii', et le réseau primaire comportant également des canaux de contrôle et canaux de retour à faible débit orthogonaux orientés dans chaque paire de connexion ii', et un réseau adjoint étant défini par un trafic de données sans fil composé des données de signalisation dans le canal de transmission interférant des noeuds de réception i' vers les noeuds d'émission i dans chaque paire de connexion ii', le noeud d'émission étant réalisé pour utiliser, pendant le trafic de données sans fil, le réseau primaire et le réseau adjoint en alternance pour mettre à disposition l'information sur l'état de puissance actuelle dans le réseau nécessaire pour la formation de gradients itérative dans un algorithme à base de gradients itératif sélectionné, et ce par

- des moyens destinés à envoyer, dans le réseau primaire, des symboles de données et des symboles pilotes de manière synchrone avec les autres noeuds d'émission dans une trame de temps convenue entre tous les noeuds d'émission i, via le canal de transmission interférant,
- des moyens destinés à recevoir, dans le réseau primaire, un rapport signal-interférence, ou une fonction dépendant de ce dernier, déterminé au noeud de réception correspondant par établissement de la moyenne sur les symboles pilotes ou de données, localement via le canal de contrôle,
- des moyens destinés à recevoir, dans le réseau adjoint, un signal qui résulte d'un envoi globalement synchrone de données de signalisation, des noeuds de réception i' vers les noeuds d'envoi i dans les paires de connexion ii', réalisé dans une trame de temps convenue entre tous les noeuds de réception i', via le canal de transmission interférant, qui sont prédistorsionnées pour compenser l'influence du canal de transmission orienté formé respectivement dans une paire de connexion ii' sur le canal de transmission interférant, et
- des moyens destinés à déterminer, à partir des données de signalisation prédistorsionnées reçues, l'information sur l'état de puissance dans le réseau nécessaire pour calculer les i-ièmes composantes de gradients dans l'algorithme itératif sélectionné.

3. Noeud d'émission selon la revendication 2, dans lequel des moyens destinés à déterminer l'information sur l'état de puissance dans le réseau nécessaire pour calculer les i-ièmes composantes de gradients dans l'algorithme itératif sélectionné sont réalisés pour

- estimer une puissance d'émission du noeud de réception correspondant à partir des données de signalisation prédistorsionnées,
et
- calculer les i-ièmes composantes de gradients dans l'algorithme itératif sélectionné sur base de la puissance d'émission estimée et du rapport signal-interférence ou de la fonction dépendant de ce dernier.

**4.** Noeud de réception pour un réseau sans fil à allocation de puissance d'émission en ligne décentralisée selon un algorithme itératif conçu selon le principe du meilleur effort pour un trafic de données élastique, le réseau sans fil présentant des noeuds d'émission i et des noeuds de réception i' qui forment des paires de connexion ii' actuelles reliées directement, et un canal de transmission interférant dont le comportement de transmission réciproque est connu aux noeuds de réception i', un réseau primaire étant défini par un trafic de données sans fil composé de données d'informations à transmettre et de données de signalisation commandant le réseau dans le canal de transmission interférant des noeuds d'émission i aux noeuds de réception i' dans chaque paire de connexion ii', et le réseau primaire comportant également des canaux de contrôle et canaux de retour à faible débit orthogonaux orientés dans chaque paire de connexion ii', et un réseau adjoint étant défini par un trafic de données sans fil composé des données de signalisation dans le canal de transmission interférant des noeuds de réception i' vers les noeuds d'émission i dans chaque paire de connexion ii', le noeud d'émission étant réalisé pour utiliser, pendant le trafic de données sans fil, le réseau primaire et le réseau adjoint en alternance pour mettre à disposition l'information sur l'état de puissance actuelle dans le réseau nécessaire pour la formation de gradients itérative dans un algorithme à base de gradients itératif sélectionné, et ce par

- des moyens destinés à recevoir, dans le réseau primaire, un signal qui résulte d'un envoi synchrone de symboles de données et de symboles pilotes, des noeuds d'émission i vers les noeuds de réception i' dans les paires de connexion ii', réalisé dans une trame de temps convenue entre tous les noeuds d'émission i, via le canal de transmission interférant,
- des moyens destinés à déterminer un rapport signal-interférence ou une fonction dépendant de ce dernier par établissement de la moyenne sur les symboles pilotes ou de données,
- des moyens destinés à envoyer, dans le réseau primaire, le rapport signal-interférence ou la fonction dépendant de ce dernier localement via le canal de contrôle vers les noeuds d'émission correspondants, et
- des moyens destinés à envoyer de manière globalement synchrone, dans le réseau adjoint, des données de signalisation vers les autres noeuds de réception dans une trame de temps convenue entre tous les noeuds de réception i', via le canal de transmission interférant, et ce avec prédistorsion des données de signalisation à l'aide du rapport signal-interférence ou de la fonction dépendant de ce dernier.

**5.** Réseau sans fil à allocation de puissance d'émission en ligne décentralisée selon un algorithme itératif conçu selon le principe du meilleur effort pour un trafic de données élastique, le réseau sans fil présentant des noeuds d'émission i et des noeuds de réception i' qui forment des paires de connexion ii' actuelles reliées directement, et un canal de transmission interférant dont le comportement de transmission réciproque est connu aux noeuds de réception i', un réseau primaire étant défini par un trafic de données sans fil composé de données d'informations à transmettre et de données de signalisation commandant le réseau dans le canal de transmission interférant des noeuds d'émission i aux noeuds de réception i' dans chaque paire de connexion ii', et le réseau primaire comportant également des canaux de contrôle et canaux de retour à faible débit orthogonaux orientés dans chaque paire de connexion ii', et un réseau adjoint étant défini par un trafic de données sans fil composé des données de signalisation dans le canal de transmission interférant des noeuds de réception i' vers les noeuds d'émission i dans chaque paire de connexion ii', le réseau sans fil étant réalisé de sorte que le réseau primaire et le réseau adjoint soient utilisés, pendant le trafic de données sans fil, en alternance pour mettre à disposition l'information sur l'état de puissance actuelle dans le réseau nécessaire pour la formation de gradients itérative dans un algorithme à base de gradients itératif sélectionné, et ce en ce que dans le réseau primaire

- les données de signalisation sont envoyées de manière globalement synchrone dans une trame de temps convenue entre tous les noeuds d'émission i, via le canal de transmission interférant,
- les données de signalisation sont envoyées localement via les canaux de contrôle dans chaque paire de connexion ii' en ce qui concerne la pondération variable des priorités de connexion,
- les données de signalisation sont envoyées localement via les canaux de retour dans chaque paire de connexion ii' en ce qui concerne l'état actuel du canal de transmission, et
- une première adaptation de puissance d'émission est effectuée dans les noeuds d'émission i,
et
dans le réseau adjoint
- les données de signalisation sont prédistorsionnées aux noeuds de réception i', pour compenser l'influence du canal de transmission orienté formé respectivement dans une paire de connexion ii' sur le canal de transmission interférant,
- les données de signalisation prédistorsionnées sont envoyées de manière globalement synchrone dans une trame de temps convenue entre tous les noeuds de réception i', via le canal de transmission interférant, aux noeuds d'émission i dans les paires de connexion ii', et

- dans les noeuds d'émission i est déterminée, à partir des données de signalisation prédistorsionnées reçues, l'information sur l'état de puissance dans le réseau nécessaire pour calculer les i-ièmes composantes de gradients dans l'algorithme itératif sélectionné.

6. Procédé pour faire fonctionner un noeud d'émission pour un réseau sans fil à allocation de puissance d'émission en ligne décentralisée selon un algorithme itératif conçu selon le principe du meilleur effort pour un trafic de données élastique, le réseau sans fil présentant des noeuds d'émission i et des noeuds de réception i' qui forment des paires de connexion ii' actuelles reliées directement, et un canal de transmission interférant dont le comportement de transmission réciproque est connu aux noeuds de réception i', un réseau primaire étant défini par un trafic de données sans fil composé de données d'informations à transmettre et de données de signalisation commandant le réseau dans le canal de transmission interférant des noeuds d'émission i aux noeuds de réception i' dans chaque paire de connexion ii', et le réseau primaire comportant également des canaux de contrôle et canaux de retour à faible débit orthogonaux orientés dans chaque paire de connexion ii', et un réseau adjoint étant défini par un trafic de données sans fil composé des données de signalisation dans le canal de transmission interférant des noeuds de réception i' vers les noeuds d'émission i dans chaque paire de connexion ii', le réseau primaire et le réseau adjoint étant utilisés, pendant le trafic de données sans fil, en alternance pour mettre à disposition l'information sur l'état de puissance actuelle dans le réseau nécessaire pour la formation de gradients itérative dans un algorithme à base de gradients itératif sélectionné, et ce par le fait de

- envoyer, dans le réseau primaire, des symboles de données et des symboles pilotes de manière synchrone avec les autres noeuds d'émission dans une trame de temps convenue entre tous les noeuds d'émission i, via le canal de transmission interférant,
- recevoir, dans le réseau primaire, un rapport signal-interférence, ou une fonction dépendant de ce dernier, déterminé au noeud de réception correspondant par établissement de la moyenne sur les symboles pilotes ou de données, localement via le canal de contrôle,
- recevoir, dans le réseau adjoint, un signal qui résulte d'un envoi globalement synchrone de données de signalisation, des noeuds de réception i' vers les noeuds d'envoi i dans les paires de connexion ii', réalisé dans une trame de temps convenue entre tous les noeuds de réception i', via le canal de transmission interférant, qui sont prédistorsionnées pour la compensation de l'influence du canal de transmission orienté formé respectivement dans une paire de connexion ii' sur le canal de transmission interférant, et
- déterminer, à partir des données de signalisation prédistorsionnées reçues, l'information sur l'état de puissance dans le réseau nécessaire pour calculer les i-ièmes composantes de gradients dans l'algorithme itératif sélectionné.

7. Procédé pour faire fonctionner un noeud de réception pour un réseau sans fil à allocation de puissance d'émission en ligne décentralisée selon un algorithme itératif conçu selon le principe du meilleur effort pour un trafic de données élastique, le réseau sans fil présentant des noeuds d'émission i et des noeuds de réception i' qui forment des paires de connexion ii' actuelles reliées directement, et un canal de transmission interférant dont le comportement de transmission réciproque est connu aux noeuds de réception i', un réseau primaire étant défini par un trafic de données sans fil composé de données d'informations à transmettre et de données de signalisation commandant le réseau dans le canal de transmission interférant des noeuds d'émission i aux noeuds de réception i' dans chaque paire de connexion ii', et le réseau primaire comportant également des canaux de contrôle et canaux de retour à faible débit orthogonaux orientés dans chaque paire de connexion ii', et un réseau adjoint étant défini par un trafic de données sans fil composé des données de signalisation dans le canal de transmission interférant des noeuds de réception i' vers les noeuds d'émission i dans chaque paire de connexion ii', le réseau primaire et le réseau adjoint étant utilisés, pendant le trafic de données sans fil, en alternance pour mettre à disposition l'information sur l'état de puissance actuelle dans le réseau nécessaire pour la formation de gradients itérative dans un algorithme à base de gradients itératif sélectionné, et ce par le fait de

- recevoir, dans le réseau primaire, un signal qui résulte d'un envoi synchrone de symboles de données et de symboles pilotes, des noeuds d'émission i vers les noeuds de réception i' dans les paires de connexion ii', réalisé dans une trame de temps convenue entre tous les noeuds d'émission i, via le canal de transmission interférant,
- déterminer un rapport signal-interférence ou une fonction dépendant de ce dernier par établissement de la moyenne sur les symboles pilotes ou de données,
- envoyer, dans le réseau primaire, le rapport signal-interférence ou la fonction dépendant de ce dernier localement via le canal de contrôle vers les noeuds d'émission correspondants, et
- envoyer de manière globalement synchrone, dans le réseau adjoint, des données de signalisation vers les autres noeuds de réception dans une trame de temps convenue entre tous les noeuds de réception i', via le canal de transmission interférant, et ce avec prédistorsion des données de signalisation à l'aide du rapport signal-interférence ou de la fonction dépendant de ce dernier.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **MUNG CHIANG.** Balancing Transport and Physical Layers in Wireless Multihop Networks : Jointly Optimal Congestion Control ans Power Control. *IEEE Journal of Selected Areas in Communications,* Januar 2005, vol. 23 (1), 104-116